# EUROPEAN PATENT APPLICATION

(11) **EP 4 525 507 A1**
(43) Date of publication of application: **19.03.2025**
(21) Application number: 22941046.9
(22) Date of filing: 09.05.2022
(51) Int. Cl.: H04W 24/08

(54) **RESOURCE CONFIGURATION METHOD AND APPARATUS, AND USER EQUIPMENT, NETWORK-SIDE DEVICE, AND STORAGE MEDIUM**

(71) Applicant: Beijing Xiaomi Mobile Software Co., Ltd., Beijing 100085 (CN)
(72) Inventor: ZHOU, Rui, Beijing 100085 (CN)
(74) Representative: Dehns Germany Partnerschaft mbB
(86) International application number: PCT/CN2022/091808
(87) International publication number: WO 2023/216079

(57) **Abstract**

The present disclosure belongs to the technical field of communications. Provided are a resource configuration method and apparatus, and devices and a storage medium. The method comprises: reporting measurement capability information to a network device, wherein the measurement capability information comprises: first capability information, which indicates a measurement capability of a UE when same measures a non-connected cell of the UE, and/or second capability information, which indicates a measurement capability of the UE when same simultaneously measures a connected cell and the non-connected cell; and acquiring a first measurement resource configuration, which is configured by the network device and is used for the measurement of the non-connected cell, and a second measurement resource configuration, which is configured by the network device and is used for the measurement of the connected cell. The method in the present disclosure enables a measurement resource configuration, which is configured by a network device, to match a measurement capability of a UE, such that the situation of" a measurement resource configuration, which is configured by a network device to a UE, being greater than the measurement capability of the UE, such that the UE cannot implement measurement, thus causing resource waste, or the measurement resource configuration, which is configured by the network device to the UE, being less than the measurement capability of the UE, such that the UE cannot acquire an accurate measurement result" is avoided, thereby realizing accurate configuration of a measurement resource.

## Description

### TECHNICAL FIELD

The disclosure relates to the field of communication technology, and more particularly, to a method for resource configuration, an apparatus for resource configuration, a device, and a storage medium.

### BACKGROUND

In a communication system, multi-beam management technology allows UE (User Equipment) to connect to multiple network devices at the same time, thereby achieving better signal connections and communication rates. During a multi-beam management process between cells, in addition to measuring a connected cell, the UE also performs operations to discover and measure non-connected cells.

In the related art, the UE only reports its measurement capability for the connected cell to the network device, which may cause the network device to be unable to configure accurate measurement resources to the UE. For example, if the measurement resources configured by the network device to the UE are greater than the measurement capability of the UE, the UE may be unable to perform the measurement, resulting in a waste of resources, or the measurement resources configured by the network device to the UE may be smaller than the measurement capability of the UE, resulting in the UE being unable to acquire an accurate measurement result.

### SUMMARY

The present disclosure provides a method for resource configuration, an apparatus for resource configuration, a device, and a storage medium, to solve the problem in related art that the network device cannot configure accurate measurement resources to a user equipment (UE).

An aspect of embodiments of the present disclosure provides a method for resource configuration. The method is performed by a user equipment (UE). The method includes:
reporting measurement capability information to a network device, in which the measurement capability information includes at least one of:
first capability information, configured to indicate a measurement capability of the UE for measuring a non-connected cell of the UE; or
second capability information, configured to indicate a measurement capability of the UE for measuring a connected cell and the non-connected cell of the UE at the same time; and
acquiring a first measurement resource configuration for measuring the non-connected cell and a second measurement resource configuration for measuring the connected cell configured by the network device.

Optionally, in an embodiment of the disclosure, the first capability information includes a maximum number of reference signals supported by the UE when the UE simultaneously measures a plurality of reference signals for the non-connected cell.

Optionally, in an embodiment of the disclosure, the second capability information includes a maximum number of reference signals supported by the UE when the UE simultaneously measures reference signals for the connected cell and the non-connected cell.

Optionally, in an embodiment of the disclosure, reporting the measurement capability information to the network device includes:
reporting the measurement capability information to the network device through a radio resource control (RRC) signaling.

Optionally, in an embodiment of the disclosure, in response to the network device configuring the UE to simultaneously measure the connected cell and the non-connected cell, a time domain resource corresponding to the first measurement resource configuration is the same as a time domain resource corresponding to the second measurement resource configuration; and
the first measurement resource configuration and the second measurement resource configuration meet following conditions:
a number of resources occupied by reference signals to be measured in the first measurement resource configuration is less than or equal to the maximum number in the first capability information; and
a number of resources occupied by reference signals to be measured in the first measurement resource configuration and the second measurement resource configuration is less than or equal to the maximum number in the second capability information.

Optionally, in an embodiment of the disclosure, in response to the network device configuring the UE not to measure the connected cell and the non-connected cell simultaneously, a time domain resource corresponding to the first measurement resource configuration is different from a time domain resource corresponding to the second measurement resource; and
the first measurement resource configuration and the second measurement resource configuration meet a following condition:
a number of resources occupied by reference signals to be measured in the first measurement resource configuration is less than or equal to the maximum number in the first capability information.

Another aspect of embodiments of the present disclosure provides a method for resource configuration. The method is performed by a network device, and the method includes:
acquiring measurement capability information reported by user equipment (UE), in which the measurement capability information includes at least one of:
first capability information, configured to indicate a measurement capability of the UE when the UE measures a non-connected cell of the UE; or
second capability information, configured to indicate a measurement capability of the UE when the UE measures a connected cell and the non-connected cell of the UE simultaneously; and
configuring a first measurement resource configuration for measuring the non-connected cell and a second measurement resource configuration for measuring the connected cell to the UE.

Optionally, in an embodiment of the disclosure, the first capability information includes a maximum number of reference signals supported by the UE when the UE simultaneously measures a plurality of reference signals for the non-connected cell.

Optionally, in an embodiment of the disclosure, the second capability information includes a maximum number of reference signals supported by the UE when the UE simultaneously measures reference signals for the connected cell and the non-connected cell.

Optionally, in an embodiment of the disclosure, acquiring the measurement capability information reported by the UE includes:
acquiring the measurement capability information reported by the UE through a radio resource control (RRC) signaling.

Optionally, in an embodiment of the disclosure, in response to the network device configuring the UE to simultaneously measure the connected cell and the non-connected cell, a time domain resource corresponding to the first measurement resource configuration is the same as a time domain resource corresponding to the second measurement resource configuration; and
the first measurement resource configuration and the second measurement resource configuration meet following conditions:
a number of resources occupied by reference signals to be measured in the first measurement resource configuration is less than or equal to the maximum number in the first capability information; and
a number of resources occupied by reference signals to be measured in the first measurement resource configuration and the second measurement resource configuration is less than or equal to the maximum number in the second capability information.

Optionally, in an embodiment of the disclosure, in response to the network device configuring the UE not to measure the connected cell and the non-connected cell simultaneously, a time domain resource corresponding to the first measurement resource configuration is different from a time domain resource corresponding to the second measurement resource configuration; and
the first measurement resource configuration and the second measurement resource configuration meet a following condition:
a number of resources occupied by reference signals to be measured in the first measurement resource configuration is less than or equal to the maximum number in the first capability information.

Another aspect of embodiments of the present disclosure provides an apparatus for resource configuration. The apparatus includes:
a reporting module, configured to report measurement capability information to a network device, in which the measurement capability information includes at least one of:
first capability information, configured to indicate a measurement capability of user equipment (UE) when the UE measures a non-connected cell of the UE; or
second capability information, configured to indicate a measurement capability of the UE when the UE measures a connected cell and the non-connected cell of the UE simultaneously; and
an acquiring module, configured to acquire a first measurement resource configuration for measuring the non-connected cell and a second measurement resource configuration for measuring the connected cell configured by the network device.

Another aspect of embodiments of the present disclosure provides an apparatus for resource configuration. The apparatus includes:
an acquiring module, configured to acquire measurement capability information reported by user equipment (UE), in which the measurement capability information includes at least one of:
first capability information, configured to indicate a measurement capability of the UE when the UE measures a non-connected cell of the UE; or
second capability information, configured to indicate a measurement capability of the UE when the UE measures a connected cell and the non-connected cell of the UE simultaneously; and
a configuration module, configured to configure a first measurement resource configuration for measuring the non-connected cells and a second measurement resource configuration for measuring the connected cell to the UE.

Another aspect of embodiments of the present disclosure provides a communication device. The communication device includes: a processor and a memory for storing a computer program. The processor is configured to execute the computer program stored in the memory, so that the communication device performs the method provided by the above aspect of embodiments.

Another aspect of embodiments of the present disclosure provides a communication device. The communication device includes: a processor and a memory for storing a computer program. The processor is configured to execute the computer program stored in the memory, so that the communication device performs the method provided by the above aspect of embodiments.

Another aspect of embodiments of the present disclosure provides a communication device. The communication device includes a processor and an interface circuit;
the interface circuit is configured to receive code instructions and transmit the code instructions to the processor; and
the processor is configured to run the code instructions to perform the method provided by the above aspect of embodiments.

Another aspect of embodiments of the present disclosure provides a communication device. The communication device includes a processor and an interface circuit;
the interface circuit is configured to receive code instructions and transmit the code instructions to the processor; and
the processor is configured to run the code instructions to perform the method provided by the above aspect of embodiments.

Another aspect of embodiments of the present disclosure provides a computer-readable storage medium for storing instructions. When the instructions are executed, the method provided by the above aspect of embodiments is implemented.

Another aspect of embodiments of the present disclosure provides a computer-readable storage medium for storing instructions. When the instructions are executed, the method provided by the above aspect of embodiments is implemented.

To sum up, in the method for resource configuration, the apparatus for resource configuration, the device and the storage medium provided by the embodiments of the present disclosure, the UE may report the measurement capability information to the network device. The measurement capability information includes at least one of: the first capability information that may be configured to indicate the measurement capability of the UE when the UE measures the non-connected cell of the UE, or the second capability information that may be configured to indicate the measurement capability of the UE when the UE measures the connected cell and the non-connected cell of the UE simultaneously. After that, the UE may acquire the first measurement resource configuration for measuring the non-connected cell and the second measurement resource configuration for measuring the connected cell configured by the network device. In this way, in embodiments of the present disclosure, the UE may report the measurement capability of the UE for measuring the connected cell and/or the measurement capability of the UE for simultaneously measuring the connected cell and the non-connected cell to the network device. After that, the network device can configure the measurement resource configuration to the UE based on the measurement capability of the UE for measuring the connected cell and/or the measurement capability of the UE for simultaneously measuring the connected cell and the non-connected cell, so that the measurement resource configuration configured by the network device can match the measurement capability of the UE, avoiding the situation of "the measurement resource configuration configured to the UE by the network device is greater than the measurement capability of the UE, causing the UE to be unable to perform the measurement, resulting in a waste of resources, or the measurement resource configured to the UE by the network device is smaller than the measurement capability of the UE, resulting in the UE being unable to acquire an accurate measurement result" , achieving accurate configuration of measurement resources.

### BRIEF DESCRIPTION OF THE DRAWINGS

The above and/or additional aspects and advantages of the present disclosure will become apparent and readily understood from the following description of the embodiments in conjunction with the accompanying drawings, in which:
FIG. 1 is a flow chart of a method for resource configuration provided by an embodiment of the present disclosure;
FIG. 2 is a flow chart of a method for resource configuration provided by an embodiment of the present disclosure;
FIG. 3 is a flow chart of a method for resource configuration provided by an embodiment of the present disclosure;
FIG. 4 is a flow chart of a method for resource configuration provided by an embodiment of the present disclosure;
FIG. 5a is a flow chart of a method for resource configuration provided by an embodiment of the present disclosure;
FIG. 5b is a flow chart of a method for resource configuration provided by an embodiment of the present disclosure;
FIG. 6a is a flow chart of a method for resource configuration provided by an embodiment of the present disclosure;
FIG. 6b is a flow chart of a method for resource configuration provided by an embodiment of the present disclosure;
FIG. 7 is a flow chart of a method for resource configuration provided by an embodiment of the present disclosure;
FIG. 8 is a flow chart of a method for resource configuration provided by an embodiment of the present disclosure;
FIG. 9 is a flow chart of a method for resource configuration provided by an embodiment of the present disclosure;
FIG. 10 is a flow chart of a method for resource configuration provided by an embodiment of the present disclosure;
FIG. 11a is a flow chart of a method for resource configuration provided by an embodiment of the present disclosure;
FIG. 11b is a flow chart of a method for resource configuration provided by an embodiment of the present disclosure;
FIG. 12a is a flow chart of a method for resource configuration provided by an embodiment of the present disclosure;
FIG. 12b is a flow chart of a method for resource configuration provided by an embodiment of the present disclosure;
FIG. 13 is a block diagram of an apparatus for resource configuration provided by an embodiment of the present disclosure;
FIG. 14 is a block diagram of an apparatus for resource configuration provided by an embodiment of the present disclosure;
FIG. 15 is a block diagram of user equipment (UE) provided by an embodiment of the present disclosure;
FIG. 16 is a block diagram of a network device provided by an embodiment of the present disclosure.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following embodiments do not represent all implementations consistent with embodiments of the disclosure. Rather, they are merely examples of apparatus and methods consistent with aspects of embodiments of the disclosure as detailed in the appended claims.

The terminology used in embodiments of the disclosure is for the purpose of describing particular embodiments only and is not intended to be limiting of embodiments of the disclosure. As used in embodiments of the disclosure and the appended claims, the singular forms "a," and "the" are intended to include the plural forms as well, unless the context clearly dictates otherwise. It will also be understood that the term "and/or" as used herein refers to and includes any and all possible combinations of one or more of the associated listed items.

It should be understood that although the terms first, second, third, etc. may be used in this disclosure to describe various information, the information should not be limited to these terms. These terms are only used to distinguish information of the same type from each other. For example, without departing from the scope of embodiments of the present disclosure, the first information may also be called second information, and similarly, the second information may also be called first information. Depending on the context, the word "if" as used herein may be interpreted as "when" or "while" or "in response to determining."

A method for resource configuration, an apparatus for resource configuration, a device and a storage medium provided by embodiments of the present disclosure will be described in detail below with reference to the accompanying drawings.

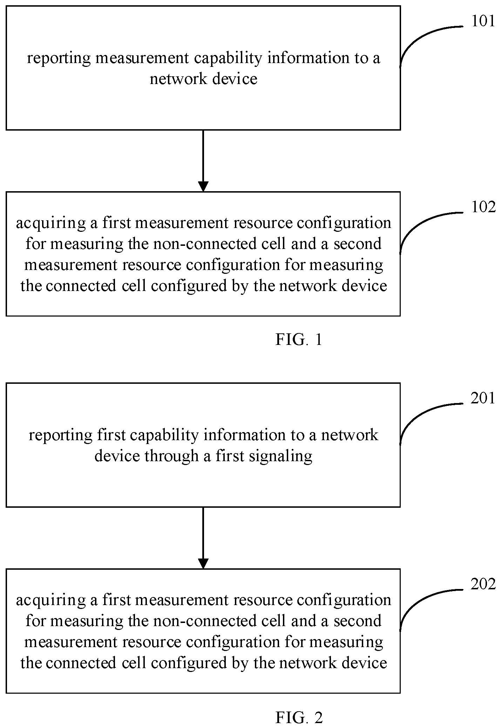

FIG. 1 is a flow chart of a method for resource configuration provided by an embodiment of the present disclosure. The method is performed by user equipment (UE). As shown in FIG. 1, the method for resource configuration may include the following steps.

At step 101, measurement capability information is reported to a network device.

It should be noted that, in an embodiment of the present disclosure, the UE may be a device that provides voice and/or data connectivity to a user. A terminal can communicate with one or more core networks via an RAN (radio access network). The UE can be an Internet of Things terminal, such as a sensor device, a mobile phone (or a "cellular" phone) and a device with an Internet of Things terminal, for example, a fixed, portable, pocket-sized, handheld, built-in computer or vehicle-mounted device. For example, it may be a station (STA), a subscriber unit, a subscriber station, a mobile station, a mobile station, a mobile, a remote station, an access point, a remote terminal, an access terminal, a user terminal or a user agent. Or, the UE may also be a device of an unmanned aerial vehicle. Or, the UE may also be a vehicle-mounted device, such as a driving computer with a wireless communication function, or a wireless terminal connected to an external driving computer. Or, the UE may also be a roadside device, such as a streetlight, a signal light, or other roadside device with a wireless communication function.

In an embodiment of the present disclosure, the measurement capability information may include at least one of first capability information and second capability information.

The first capability information is configured to indicate a measurement capability of the UE when the UE measures a non-connected cell of the UE. In an embodiment of the present disclosure, the first capability information may include a maximum number of reference signals supported by the UE when the UE simultaneously measures multiple reference signals for the non-connected cell. In an embodiment of the present disclosure, the reference signal for the non-connected cell may be a SSB (synchronization signal block), and the UE can measure L1-RSRP (Layer 1 reference signal received power) of the SSB. Based on this, the first capability information may include a maximum number of reference signals that the UE can support when measuring the L1-RSRP of multiple SSBs simultaneously on a non-connected cell. For example, if the UE can support measuring the L1-RSRP of 5 reference signals (such as 5 SSBs) simultaneously on the non-connected cell, the first capability information may be 5.

The second capability information is configured to indicate a measurement capability of the UE when the UE simultaneously measures a connected cell and the non-connected cell of the UE. In an embodiment of the present disclosure, the second capability information may include a maximum number of reference signals supported by the UE when the UE simultaneously measures reference signals for the connected cell and the non-connected cell. In an embodiment of the present disclosure, the reference signal for the connected cell may be a SSB and/or a CSI-RS (Channel State Information-Reference Signal). The UE can measure L1-RSRP of the CSI-RS. Based on this, the second capability information may include a maximum number of reference signals that the UE can support when measuring the L1-RSRP of the SSB and/or CSI-RS on the connected cell and measuring the L1-RSRP of the SSB on the non-connected cell simultaneously. For example, if the UE measures the connected cell and the non-connected cell simultaneously, and it can support measuring the L1-RSRP of a maximum of two reference signals (such as one SSB and one CSI-RS) at the same time on the connected cell, and measuring the L1-RSRP of a maximum of two reference signals (such as two SSBs) at the same time on the non-connected cell, the first capability information may be 4.

In an embodiment of the present disclosure, a method for the UE to report the measurement capability information to the network device may include: reporting the measurement capability information to the network device through an RRC (Ratio Resource Control) signaling.

At step 102, a first measurement resource configuration for measuring the non-connected cell and a second measurement resource configuration for measuring the connected cell configured by the network device are acquired.

In an embodiment of the present disclosure, the above-mentioned first measurement resource configuration and second measurement resource configuration may be configured by the network device based on the measurement capability information reported by the UE.

In an embodiment of the present disclosure, the first measurement resource configuration may include a time domain resource and a frequency domain resource corresponding to a reference signal to be measured for the non-connected cell, and the second measurement resource configuration may include a time domain resource and a frequency domain resource corresponding to a reference signal to be measured for the connected cell.

It should be noted that, in an embodiment of the present disclosure, the network device can configure the UE to simultaneously measure the connected cell and the non-connected cell. In this case, the time domain resource of the first measurement resource configuration and the time domain resource of the second measurement resource configuration configured by the network device are the same. For example, the first measurement resource configuration and the second measurement resource configuration correspond to a same time domain OFDM (orthogonal frequency division multiplexing) symbol. In another embodiment of the present disclosure, the network device may configure the UE not to measure the connected cell and non-connected cell simultaneously. In this case, the time domain resource of the first measurement resource configuration and the time domain resource of the second measurement resource configuration configured by the network device are different. When the time domain resources of the first measurement resource configuration and the second measurement resource configuration are the same or different, the first measurement resource configuration and the second measurement resource configuration acquired by the UE and configured based on the measurement capability information by the network device may be different. This part of the content may be described in subsequent embodiments.

To sum up, in the method for resource configuration provided by embodiments of the present disclosure, the UE may report the measurement capability information to the network device. The measurement capability information includes at least one of: the first capability information that may be configured to indicate the measurement capability of the UE when the UE measures the non-connected cell of the UE, or the second capability information that may be configured to indicate the measurement capability of the UE when the UE measures the connected cell and the non-connected cell of the UE simultaneously. After that, the UE may acquire the first measurement resource configuration for measuring the non-connected cell and the second measurement resource configuration for measuring the connected cell configured by the network device. In this way, in embodiments of the present disclosure, the UE may report the measurement capability of the UE for measuring the connected cell and/or the measurement capability of the UE for simultaneously measuring the connected cell and the non-connected cell to the network device. After that, the network device can configure the measurement resource configuration to the UE based on the measurement capability of the UE for measuring the connected cell and/or the measurement capability of the UE for simultaneously measuring the connected cell and the non-connected cell, so that the measurement resource configuration configured by the network device can match the measurement capability of the UE, avoiding the situation of "the measurement resource configuration configured to the UE by the network device is greater than the measurement capability of the UE, causing the UE to be unable to perform the measurement, resulting in a waste of resources, or the measurement resource configured to the UE by the network device is smaller than the measurement capability of the UE, resulting in the UE being unable to acquire an accurate measurement result", achieving accurate configuration of measurement resources.

FIG. 2 is a flow chart of a method for resource configuration provided by an embodiment of the present disclosure. The method is performed by a UE. As shown in FIG. 2, the method for resource configuration may include the following steps.

At step 201, first capability information is reported to a network device through a first signaling.

In an embodiment of the present disclosure, the first signaling may be, for example, a maxNumberSSB-Resource-NSC (a maximum number of SSB resources for L1-RSRP measurement supported by an unlicensed cell) signaling.

At step 202, a first measurement resource configuration for measuring a non-connected cell and a second measurement resource configuration for measuring a connected cell configured by the network device are acquired.

Detailed introduction to steps 201-202 may refer to description of the above embodiments, and will not be repeated in embodiments of the present disclosure here.

To sum up, in the method for resource configuration provided by embodiments of the present disclosure, the UE may report the measurement capability information to the network device. The measurement capability information includes at least one of: the first capability information that may be configured to indicate the measurement capability of the UE when the UE measures the non-connected cell of the UE, or the second capability information that may be configured to indicate the measurement capability of the UE when the UE measures the connected cell and the non-connected cell of the UE simultaneously. After that, the UE may acquire the first measurement resource configuration for measuring the non-connected cell and the second measurement resource configuration for measuring the connected cell configured by the network device. In this way, in embodiments of the present disclosure, the UE may report the measurement capability of the UE for measuring the connected cell and/or the measurement capability of the UE for simultaneously measuring the connected cell and the non-connected cell to the network device. After that, the network device can configure the measurement resource configuration to the UE based on the measurement capability of the UE for measuring the connected cell and/or the measurement capability of the UE for simultaneously measuring the connected cell and the non-connected cell, so that the measurement resource configuration configured by the network device can match the measurement capability of the UE, avoiding the situation of "the measurement resource configuration configured to the UE by the network device is greater than the measurement capability of the UE, causing the UE to be unable to perform the measurement, resulting in a waste of resources, or the measurement resource configured to the UE by the network device is smaller than the measurement capability of the UE, resulting in the UE being unable to acquire an accurate measurement result", achieving accurate configuration of measurement resources.

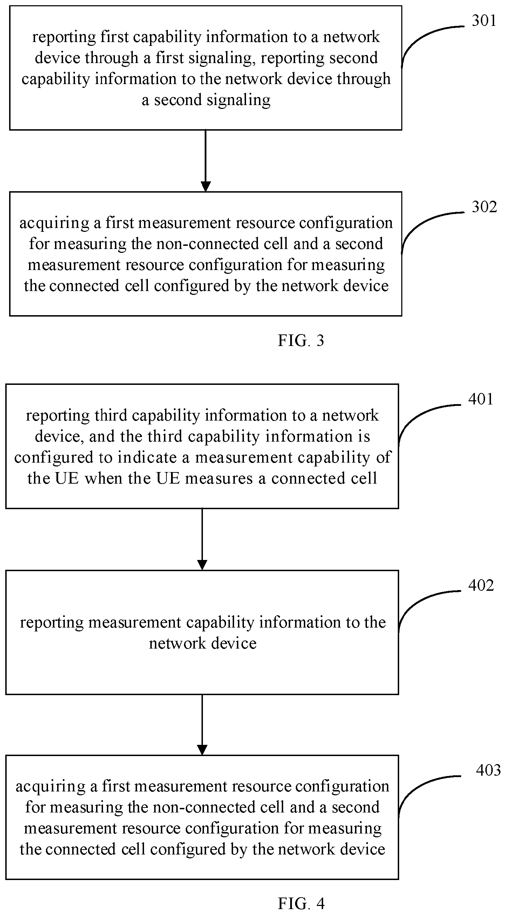

FIG. 3 is a flow chart of a method for resource configuration provided by an embodiment of the present disclosure. The method is performed by a UE. As shown in FIG. 3, the method for resource configuration may include the following steps.

At step 301, first capability information is reported to a network device through a first signaling, and second capability information is reported to the network device through a second signaling.

In an embodiment of the present disclosure, the first signaling may be, for example, a maxNumberSSB-Resource-NSC signaling, and the second signaling may be, for example, a maxNumberSSB-CSI-RS-Total (a total number of resources for L1-RSRP measurement supported by licensed and unlicensed cells).

At step 302, a first measurement resource configuration for measuring a non-connected cell and a second measurement resource configuration for measuring a connected cell configured by the network device are acquired.

Detailed introduction to steps 301-302 may refer to description of the above embodiments, and will not be repeated in embodiments of the present disclosure here.

To sum up, in the method for resource configuration provided by embodiments of the present disclosure, the UE may report the measurement capability information to the network device. The measurement capability information includes at least one of: the first capability information that may be configured to indicate the measurement capability of the UE when the UE measures the non-connected cell of the UE, or the second capability information that may be configured to indicate the measurement capability of the UE when the UE measures the connected cell and the non-connected cell of the UE simultaneously. After that, the UE may acquire the first measurement resource configuration for measuring the non-connected cell and the second measurement resource configuration for measuring the connected cell configured by the network device. In this way, in embodiments of the present disclosure, the UE may report the measurement capability of the UE for measuring the connected cell and/or the measurement capability of the UE for simultaneously measuring the connected cell and the non-connected cell to the network device. After that, the network device can configure the measurement resource configuration to the UE based on the measurement capability of the UE for measuring the connected cell and/or the measurement capability of the UE for simultaneously measuring the connected cell and the non-connected cell, so that the measurement resource configuration configured by the network device can match the measurement capability of the UE, avoiding the situation of "the measurement resource configuration configured to the UE by the network device is greater than the measurement capability of the UE, causing the UE to be unable to perform the measurement, resulting in a waste of resources, or the measurement resource configured to the UE by the network device is smaller than the measurement capability of the UE, resulting in the UE being unable to acquire an accurate measurement result", achieving accurate configuration of measurement resources.

FIG. 4 is a flow chart of a method for resource configuration provided by an embodiment of the present disclosure. The method is performed by a UE. As shown in FIG. 4, the method for resource configuration may include the following steps.

At step 401, third capability information is reported to a network device, and the third capability information is configured to indicate a measurement capability of the UE when the UE measures a connected cell.

In an embodiment of the present disclosure, the third capability information may include a maximum number of reference signals that the UE is able to support when the UE simultaneously measures multiple reference signals for the connected cell. In an embodiment of the present disclosure, the reference signal for the connected cell may be a SSB and/or a CSI-RS. Based on this, the third capability information may include a maximum number of reference signals that the UE can support for measurement when the UE simultaneously measures L1-RSRP of the SSB and/or the CSI-RS for the connected cell. For example, if the UE can support simultaneously measuring the L1-RSRP of a maximum of 5 reference signals (such as 3 SSBs and 2 CSI-RSs) on the connected cell, the first capability information may be 5.

Further, in an embodiment of the present disclosure, the UE may report the third capability information to the network device through a third signaling. The third signaling may be, for example, a beamManagementSSB-CSI-RS (a number of SSB and CSI-RS resources for beam management) signaling.

At step 402, measurement capability information is reported to the network device.

In an embodiment of the present disclosure, the measurement capability information may include at least one of first capability information and second capability information.

The first capability information is configured to indicate a measurement capability of the UE when the UE measures a non-connected cell of the UE. In an embodiment of the present disclosure, the first capability information may include a maximum number of reference signals supported by the UE when the UE simultaneously measures multiple reference signals for the non-connected cell. In an embodiment of the present disclosure, the reference signal for the non-connected cell may be a SSB, and the UE can measure L1-RSRP of the SSB. Based on this, the first capability information may include a maximum number of reference signals that the UE can support when measuring the L1-RSRP of multiple SSBs simultaneously on a non-connected cell. For example, if the UE can support measuring the L1-RSRP of 5 reference signals (such as 5 SSBs) simultaneously on the non-connected cell, the first capability information may be 5.

The second capability information is configured to indicate a measurement capability of the UE when the UE simultaneously measures a connected cell and the non-connected cell of the UE. In an embodiment of the present disclosure, the second capability information may include a maximum number of reference signals supported by the UE when the UE simultaneously measures reference signals for the connected cell and the non-connected cell. In an embodiment of the present disclosure, the reference signal for the connected cell may be a SSB and/or a CSI-RS. The UE can measure L1-RSRP of the CSI-RS. Based on this, the second capability information may include a maximum number of reference signals that the UE can support when measuring the L1-RSRP of the SSB and/or CSI-RS on the connected cell and measuring the L1-RSRP of the SSB on the non-connected cell simultaneously. For example, if the UE measures the connected cell and the non-connected cell simultaneously, and it can support measuring the L1-RSRP of a maximum of two reference signals (such as one SSB and one CSI-RS) at the same time on the connected cell, and measuring the L1-RSRP of a maximum of two reference signals (such as two SSBs) at the same time on the non-connected cell, the first capability information may be 4.

In an embodiment of the present disclosure, a method for the UE to report the measurement capability information to the network device may include: reporting the measurement capability information to the network device through an RRC signaling.

At step 403, a first measurement resource configuration for measuring the non-connected cell and a second measurement resource configuration for measuring the connected cell configured by the network device are acquired.

Detailed introduction to steps 401-402 may refer to description of the above embodiments, and will not be repeated in embodiments of the present disclosure here.

In addition, it should be noted that, in an embodiment of the present disclosure, there is no order limit between the above steps 401 and 402. That is, step 401 and step 402 may be performed at the same time, or step 401 may be performed first and then step 402 is performed, or step 402 may be performed first and then step 401 is performed.

To sum up, in the method for resource configuration provided by embodiments of the present disclosure, the UE may report the measurement capability information to the network device. The measurement capability information includes at least one of: the first capability information that may be configured to indicate the measurement capability of the UE when the UE measures the non-connected cell of the UE, or the second capability information that may be configured to indicate the measurement capability of the UE when the UE measures the connected cell and the non-connected cell of the UE simultaneously. After that, the UE may acquire the first measurement resource configuration for measuring the non-connected cell and the second measurement resource configuration for measuring the connected cell configured by the network device. In this way, in embodiments of the present disclosure, the UE may report the measurement capability of the UE for measuring the connected cell and/or the measurement capability of the UE for simultaneously measuring the connected cell and the non-connected cell to the network device. After that, the network device can configure the measurement resource configuration to the UE based on the measurement capability of the UE for measuring the connected cell and/or the measurement capability of the UE for simultaneously measuring the connected cell and the non-connected cell, so that the measurement resource configuration configured by the network device can match the measurement capability of the UE, avoiding the situation of "the measurement resource configuration configured to the UE by the network device is greater than the measurement capability of the UE, causing the UE to be unable to perform the measurement, resulting in a waste of resources, or the measurement resource configured to the UE by the network device is smaller than the measurement capability of the UE, resulting in the UE being unable to acquire an accurate measurement result", achieving accurate configuration of measurement resources.

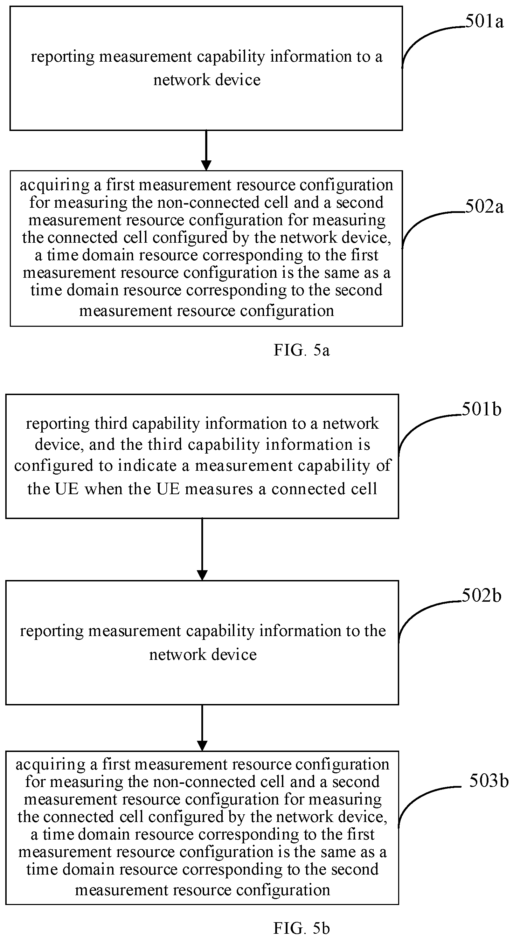

FIG. 5a is a flow chart of a method for resource configuration provided by an embodiment of the present disclosure. The method is performed by a UE. As shown in FIG. 5a, the method for resource configuration may include the following steps.

At step 501a, measurement capability information is reported to a network device.

Relevant introduction to step 501a may refer to description of the above embodiments.

At step 502a, a first measurement resource configuration for measuring the non-connected cell and a second measurement resource configuration for measuring the connected cell configured by the network device are acquired, and a time domain resource corresponding to the first measurement resource configuration is the same as a time domain resource corresponding to the second measurement resource configuration.

In an embodiment of the present disclosure, when the time domain resources corresponding to the first measurement resource configuration and the second measurement resource configuration configured by the network device to the UE are the same, it means that the network device configures the UE to simultaneously measure the connected cell and the non-connected cell. At this time, the first measurement resource configuration and the second measurement resource configuration meet the following conditions:
a number of resources occupied by reference signals to be measured in the first measurement resource configuration is less than or equal to the maximum number in the first capability information; and
a number of resources occupied by reference signals to be measured in the first measurement resource configuration and the second measurement resource configuration is less than or equal to the maximum number in the second capability information.

That is to say, in an embodiment of the present disclosure, when the network device configures the UE to simultaneously measure the connected cell and the non-connected cell, a number of reference signals to be measured for the non-connected cell is less than or equal to a maximum number of reference signals that the UE is able to support when the UE simultaneously measures multiple reference signals for the non-connected cell, and a total number of reference signals to be measured for the connected cell and the non-connected cell is less than or equal to a maximum number of reference signals that the UE is able to support when the UE simultaneously measures reference signals for the connected cell and the non-connected cell. In this way, it can ensure that the measurement resource configuration configured by the network device to the UE may not exceed the measurement capability of the UE or be excessively lower than the measurement capability of the UE, and that the measurement resource configuration configured by the network device to the UE may accurately match the measurement capability of the UE.

For example, in an embodiment of the present disclosure, the first capability information includes the number of 5, and the second capability information includes the number of 4. In this case, if the network device configures the UE to simultaneously measure the connected cell and the non-connected cell, the number of reference signals to be measured for the non-connected cell is less than or equal to 5, and the total number of reference signals to be measured for the connected cell and the non-connected cell is less than or equal to 4. For example, the number of reference signals to be measured for the non-connected cell can be 2, and the number of reference signals to be measured for the connected cell can be 2.

To sum up, in the method for resource configuration provided by embodiments of the present disclosure, the UE may report the measurement capability information to the network device. The measurement capability information includes at least one of: the first capability information that may be configured to indicate the measurement capability of the UE when the UE measures the non-connected cell of the UE, or the second capability information that may be configured to indicate the measurement capability of the UE when the UE measures the connected cell and the non-connected cell of the UE simultaneously. After that, the UE may acquire the first measurement resource configuration for measuring the non-connected cell and the second measurement resource configuration for measuring the connected cell configured by the network device. In this way, in embodiments of the present disclosure, the UE may report the measurement capability of the UE for measuring the connected cell and/or the measurement capability of the UE for simultaneously measuring the connected cell and the non-connected cell to the network device. After that, the network device can configure the measurement resource configuration to the UE based on the measurement capability of the UE for measuring the connected cell and/or the measurement capability of the UE for simultaneously measuring the connected cell and the non-connected cell, so that the measurement resource configuration configured by the network device can match the measurement capability of the UE, avoiding the situation of "the measurement resource configuration configured to the UE by the network device is greater than the measurement capability of the UE, causing the UE to be unable to perform the measurement, resulting in a waste of resources, or the measurement resource configured to the UE by the network device is smaller than the measurement capability of the UE, resulting in the UE being unable to acquire an accurate measurement result", achieving accurate configuration of measurement resources.

FIG. 5b is a flow chart of a method for resource configuration provided by an embodiment of the present disclosure. The method is performed by a UE. As shown in FIG. 5b, the method for resource configuration may include the following steps.

At step 501b, third capability information is reported to a network device, and the third capability information is configured to indicate a measurement capability of the UE when the UE measures a connected cell.

At step 502b, measurement capability information is reported to the network device.

Relevant introduction to steps 501b-502b may refer to description of the above embodiments.

At step 503b: a first measurement resource configuration for measuring the non-connected cell and a second measurement resource configuration for measuring the connected cell configured by the network device are acquired, and a time domain resource corresponding to the first measurement resource configuration is the same as a time domain resource corresponding to the second measurement resource configuration.

In an embodiment of the present disclosure, when the time domain resources corresponding to the first measurement resource configuration and the second measurement resource configuration configured by the network device to the UE are the same, it means that the network device configures the UE to simultaneously measure the connected cell and the non-connected cell. In this case, the first measurement resource configuration and the second measurement resource configuration meet the following conditions:
a number of resources occupied by reference signals to be measured in the first measurement resource configuration is less than or equal to the maximum number in the first capability information;
a number of resources occupied by reference signals to be measured in the second measurement resource configuration is less than or equal to the maximum number in the third capability information; and
a number of resources occupied by reference signals to be measured in the first measurement resource configuration and the second measurement resource configuration is less than or equal to the maximum number in the second capability information.

That is to say, in an embodiment of the present disclosure, when the network device configures the UE to simultaneously measure the connected cell and the non-connected cell, a number of reference signals to be measured for the non-connected cell is less than or equal to a maximum number of reference signals that the UE is able to support when the UE simultaneously measures multiple reference signals for the non-connected cell, a number of reference signals to be measured for the connected cell is less than or equal to a maximum number of reference signals that the UE is able to support when the UE simultaneously measures multiple reference signals for the connected cell, and a total number of reference signals to be measured for the connected cell and the non-connected cell is less than or equal to a maximum number of reference signals that the UE is able to support when the UE simultaneously measures reference signals for the connected cell and the non-connected cell. In this way, it can ensure that the measurement resource configuration configured by the network device to the UE may not exceeds the measurement capability of the UE or be excessively lower than the measurement capability of the UE, and that the measurement resource configuration configured by the network device to the UE may accurately match the measurement capability of the UE.

For example, in an embodiment of the present disclosure, the first capability information includes the number of 5, the second capability information includes the number of 4, and the third capability information include the number of 6. In this case, if the network device configures the UE to simultaneously measure the connected cell and the non-connected cell, the number of reference signals to be measured for the non-connected cell is less than or equal to 5, the number of reference signals to be measured for the connected cell is less than or equal to 6, and the total number of reference signals to be measured for the connected cell and the non-connected cell is less than or equal to 4. For example, the number of reference signals to be measured for the non-connected cell can be 2, and the number of reference signals to be measured for the connected cells can be 2.

To sum up, in the method for resource configuration provided by embodiments of the present disclosure, the UE may report the measurement capability information to the network device. The measurement capability information includes at least one of: the first capability information that may be configured to indicate the measurement capability of the UE when the UE measures the non-connected cell of the UE, or the second capability information that may be configured to indicate the measurement capability of the UE when the UE measures the connected cell and the non-connected cell of the UE simultaneously. After that, the UE may acquire the first measurement resource configuration for measuring the non-connected cell and the second measurement resource configuration for measuring the connected cell configured by the network device. In this way, in embodiments of the present disclosure, the UE may report the measurement capability of the UE for measuring the connected cell and/or the measurement capability of the UE for simultaneously measuring the connected cell and the non-connected cell to the network device. After that, the network device can configure the measurement resource configuration to the UE based on the measurement capability of the UE for measuring the connected cell and/or the measurement capability of the UE for simultaneously measuring the connected cell and the non-connected cell, so that the measurement resource configuration configured by the network device can match the measurement capability of the UE, avoiding the situation of "the measurement resource configuration configured to the UE by the network device is greater than the measurement capability of the UE, causing the UE to be unable to perform the measurement, resulting in a waste of resources, or the measurement resource configured to the UE by the network device is smaller than the measurement capability of the UE, resulting in the UE being unable to acquire an accurate measurement result", achieving accurate configuration of measurement resources.

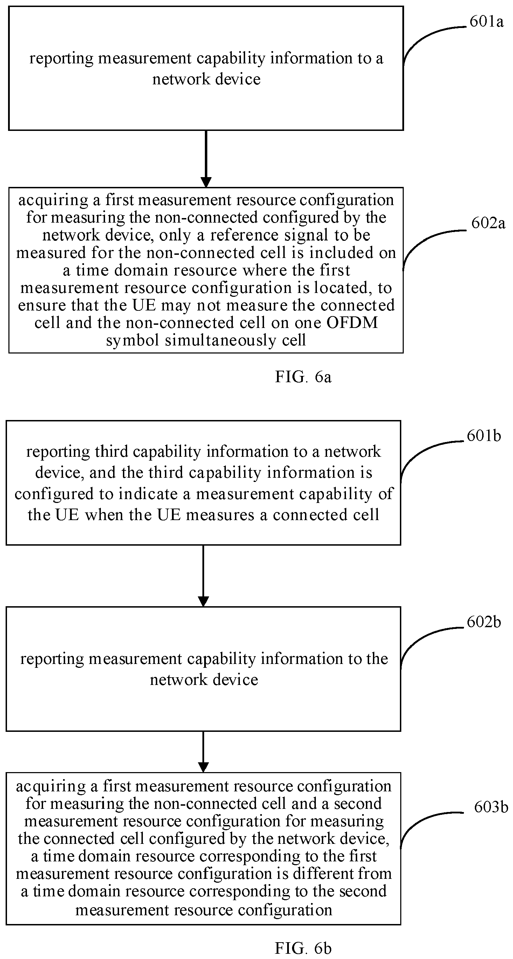

FIG. 6a is a flow chart of a method for resource configuration provided by an embodiment of the present disclosure. The method is performed by a UE. As shown in FIG. 6a, the method for resource configuration may include the following steps.

At step 601a, measurement capability information is reported to a network device.

Relevant introduction to step 601a may refer to description of the above embodiments.

At step 602a, a first measurement resource configuration for measuring a non-connected cell configured by the network device is acquired, only a reference signal to be measured for the non-connected cell is included on a time domain resource where the first measurement resource configuration is located, to ensure that the UE may not measure the connected cell and the non-connected cell on one OFDM symbol simultaneously.

In an embodiment of the present disclosure, when a time domain resource corresponding to the first measurement resource configuration configured by the network device to the UE is different from a time domain resource corresponding to the second measurement resource configuration configured by the network device to the UE, it means that the network device configures the UE not to measure the connected cell and the non-connected cell simultaneously. In this case, the first measurement resource configuration and the second measurement resource configuration meet a following condition:
a number of resources occupied by reference signals to be measured in the first measurement resource configuration is less than or equal to the maximum number in the first capability information.

That is, in an embodiment of the present disclosure, when the network device configures the UE not to measure the connected cell and the non-connected cell simultaneously, a number of reference signals to be measured for the non-connected cell is less than or equal to a maximum number of reference signals that the UE is able to support when the UE simultaneously measures multiple reference signals for the non-connected cell. In this way, it can ensure that the measurement resource configuration configured by the network device to the UE may not exceed the measurement capability of the UE or be excessively lower than the measurement capability of the UE, and that the measurement resource configuration configured by the network device to the UE may accurately match the measurement capability of the UE.

For example, in an embodiment of the present disclosure, the first capability information includes the number of 5. In this case, if the network device configures the UE not to measure the connected cell and the non-connected cell simultaneously, the number of reference signals to be measured for the non-connected cell is less than or equal to 5. For example, the number of reference signals to be measured for the non-connected cell can be set to 4.

To sum up, in the method for resource configuration provided by embodiments of the present disclosure, the UE may report the measurement capability information to the network device. The measurement capability information includes at least one of: the first capability information that may be configured to indicate the measurement capability of the UE when the UE measures the non-connected cell of the UE, or the second capability information that may be configured to indicate the measurement capability of the UE when the UE measures the connected cell and the non-connected cell of the UE simultaneously. After that, the UE may acquire the first measurement resource configuration for measuring the non-connected cell and the second measurement resource configuration for measuring the connected cell configured by the network device. In this way, in embodiments of the present disclosure, the UE may report the measurement capability of the UE for measuring the connected cell and/or the measurement capability of the UE for simultaneously measuring the connected cell and the non-connected cell to the network device. After that, the network device can configure the measurement resource configuration to the UE based on the measurement capability of the UE for measuring the connected cell and/or the measurement capability of the UE for simultaneously measuring the connected cell and the non-connected cell, so that the measurement resource configuration configured by the network device can match the measurement capability of the UE, avoiding the situation of "the measurement resource configuration configured to the UE by the network device is greater than the measurement capability of the UE, causing the UE to be unable to perform the measurement, resulting in a waste of resources, or the measurement resource configured to the UE by the network device is smaller than the measurement capability of the UE, resulting in the UE being unable to acquire an accurate measurement result", achieving accurate configuration of measurement resources.

FIG. 6b is a flow chart of a method for resource configuration provided by an embodiment of the present disclosure. The method is performed by a UE. As shown in FIG. 6b, the method for resource configuration may include the following steps.

At step 601b, third capability information is reported to a network device, and the third capability information is configured to indicate a measurement capability of the UE when the UE measures a connected cell.

At step 602b, measurement capability information is reported to the network device.

Relevant introduction to steps 601b-602b may refer to description of the above embodiments.

At step 603b: a first measurement resource configuration for measuring the non-connected cell and a second measurement resource configuration for measuring the connected cell configured by the network device are acquired, and a time domain resource corresponding to the first measurement resource configuration is different from a time domain resource corresponding to the second measurement resource configuration.

In an embodiment of the present disclosure, when the time domain resource corresponding to the first measurement resource configuration is different from the time domain resource corresponding to the second measurement resource configuration, it means that the network device configures the UE not to measure the connected cell and the non-connected cell simultaneously. In this case, the first measurement resource configuration and the second measurement resource configuration meet the following conditions:
a number of resources occupied by reference signals to be measured in the first measurement resource configuration is less than or equal to the maximum number in the first capability information; and
a number of resources occupied by reference signals to be measured in the second measurement resource configuration is less than or equal to the maximum number in the third capability information.

That is, in an embodiment of the present disclosure, when the network device configures the UE not to measure the connected cell and the non-connected cells simultaneously, a number of reference signals to be measured for the non-connected cell is less than or equal to a maximum number of reference signals that the UE is able to support when the UE simultaneously measures multiple reference signals for the non-connected cell, and a number of reference signals to be measured for the connected cell is less than or equal to a maximum number that the UE is able to support when the UE simultaneously measures multiple reference signals for the connected cell. Therefore, it can ensure that the measurement resource configuration configured by the network device to the UE does not exceed the measurement capability of the UE or be excessively lower than the measurement capability of the UE, and that the measurement resource configuration configured by the network device to the UE may accurately match the measurement capability of the UE.

For example, in an embodiment of the present disclosure, the first capability information includes the number of 5, and the third capability information includes the number of 6. In this case, if the network device configures the UE not to measure the connected cell and the non-connected cell simultaneously, the number of reference signals to be measured for the non-connected cell is less than or equal to 5, and the number of reference signals to be measured for the connected cell is less than or equal to 6. For example, the number of reference signals to be measured for the non-connected cells can be 4, and the number of reference signals to be measured for the connected cells can be 5.

To sum up, in the method for resource configuration provided by embodiments of the present disclosure, the UE may report the measurement capability information to the network device. The measurement capability information includes at least one of: the first capability information that may be configured to indicate the measurement capability of the UE when the UE measures the non-connected cell of the UE, or the second capability information that may be configured to indicate the measurement capability of the UE when the UE measures the connected cell and the non-connected cell of the UE simultaneously. After that, the UE may acquire the first measurement resource configuration for measuring the non-connected cell and the second measurement resource configuration for measuring the connected cell configured by the network device. In this way, in embodiments of the present disclosure, the UE may report the measurement capability of the UE for measuring the connected cell and/or the measurement capability of the UE for simultaneously measuring the connected cell and the non-connected cell to the network device. After that, the network device can configure the measurement resource configuration to the UE based on the measurement capability of the UE for measuring the connected cell and/or the measurement capability of the UE for simultaneously measuring the connected cell and the non-connected cell, so that the measurement resource configuration configured by the network device can match the measurement capability of the UE, avoiding the situation of "the measurement resource configuration configured to the UE by the network device is greater than the measurement capability of the UE, causing the UE to be unable to perform the measurement, resulting in a waste of resources, or the measurement resource configured to the UE by the network device is smaller than the measurement capability of the UE, resulting in the UE being unable to acquire an accurate measurement result", achieving accurate configuration of measurement resources.

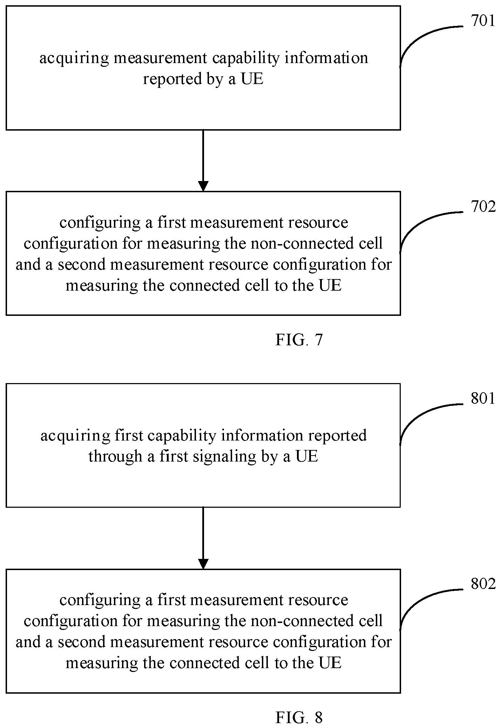

FIG. 7 is a flow chart of a method for resource configuration provided by an embodiment of the present disclosure. The method is performed by a network device. As shown in FIG. 7, the method for resource configuration may include the following steps.

At step 701, measurement capability information reported by a UE is acquired.

In an embodiment of the present disclosure, the measurement capability information may include at least one of:
first capability information, configured to indicate a measurement capability of the UE when the UE measures a non-connected cell of the UE, and the first capability information including: a maximum number of reference signals supported by the UE when the UE simultaneously measures multiple reference signals for the non-connected cell; or
second capability information, configured to indicate a measurement capability of the UE when the UE simultaneously measures a connected cell and the non-connected cell of the UE, the second capability information including: a maximum number of reference signals supported by the UE when the UE simultaneously measures reference signals for the connected cell and the non-connected cell.

In an embodiment of the present disclosure, a method for reporting the measurement capability information to the network device may include: reporting the measurement capability information to the network device through an RRC signaling.

At step 702, a first measurement resource configuration for measuring a non-connected cell and a second measurement resource configuration for measuring a connected cell are configured to the UE.

Relevant introduction to steps 701-702 may refer to description of the above embodiments.

To sum up, in the method for resource configuration provided by embodiments of the present disclosure, the UE may report the measurement capability information to the network device. The measurement capability information includes at least one of: the first capability information that may be configured to indicate the measurement capability of the UE when the UE measures the non-connected cell of the UE, or the second capability information that may be configured to indicate the measurement capability of the UE when the UE measures the connected cell and the non-connected cell of the UE simultaneously. After that, the UE may acquire the first measurement resource configuration for measuring the non-connected cell and the second measurement resource configuration for measuring the connected cell configured by the network device. In this way, in embodiments of the present disclosure, the UE may report the measurement capability of the UE for measuring the connected cell and/or the measurement capability of the UE for simultaneously measuring the connected cell and the non-connected cell to the network device. After that, the network device can configure the measurement resource configuration to the UE based on the measurement capability of the UE for measuring the connected cell and/or the measurement capability of the UE for simultaneously measuring the connected cell and the non-connected cell, so that the measurement resource configuration configured by the network device can match the measurement capability of the UE, avoiding the situation of "the measurement resource configuration configured to the UE by the network device is greater than the measurement capability of the UE, causing the UE to be unable to perform the measurement, resulting in a waste of resources, or the measurement resource configured to the UE by the network device is smaller than the measurement capability of the UE, resulting in the UE being unable to acquire an accurate measurement result", achieving accurate configuration of measurement resources.

FIG. 8 is a flow chart of a method for resource configuration provided by an embodiment of the present disclosure. The method is performed by a network device. As shown in FIG. 8, the method for resource configuration may include the following steps.

At step 801, first capability information reported through a first signaling by a UE is acquired.

In an embodiment of the present disclosure, the first signaling may be, for example, a maxNumberSSB-Resource-NSC signaling.

At step 802, a first measurement resource configuration for measuring the non-connected cell and a second measurement resource configuration for measuring a connected cell are configured to the UE.

Relevant introduction to steps 801-802 may refer to description of the above embodiments.

To sum up, in the method for resource configuration provided by embodiments of the present disclosure, the UE may report the measurement capability information to the network device. The measurement capability information includes at least one of: the first capability information that may be configured to indicate the measurement capability of the UE when the UE measures the non-connected cell of the UE, or the second capability information that may be configured to indicate the measurement capability of the UE when the UE measures the connected cell and the non-connected cell of the UE simultaneously. After that, the UE may acquire the first measurement resource configuration for measuring the non-connected cell and the second measurement resource configuration for measuring the connected cell configured by the network device. In this way, in embodiments of the present disclosure, the UE may report the measurement capability of the UE for measuring the connected cell and/or the measurement capability of the UE for simultaneously measuring the connected cell and the non-connected cell to the network device. After that, the network device can configure the measurement resource configuration to the UE based on the measurement capability of the UE for measuring the connected cell and/or the measurement capability of the UE for simultaneously measuring the connected cell and the non-connected cell, so that the measurement resource configuration configured by the network device can match the measurement capability of the UE, avoiding the situation of "the measurement resource configuration configured to the UE by the network device is greater than the measurement capability of the UE, causing the UE to be unable to perform the measurement, resulting in a waste of resources, or the measurement resource configured to the UE by the network device is smaller than the measurement capability of the UE, resulting in the UE being unable to acquire an accurate measurement result", achieving accurate configuration of measurement resources.

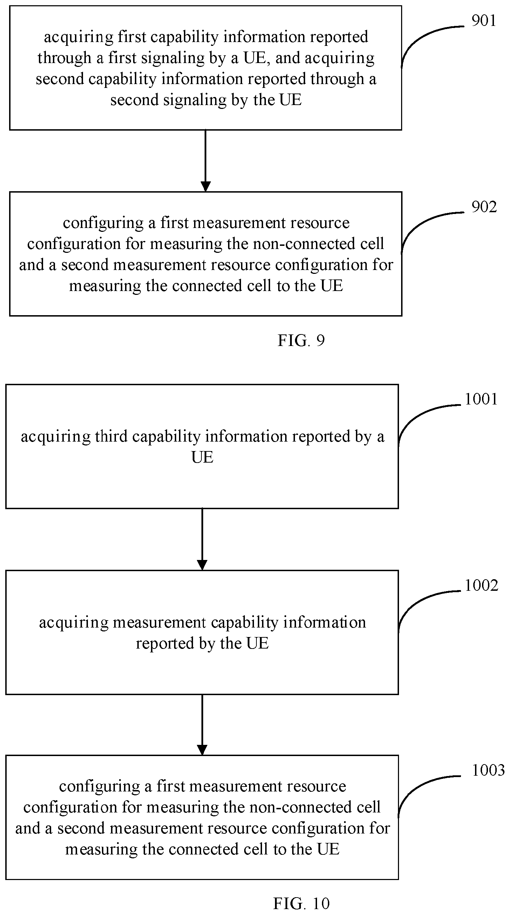

FIG. 9 is a flow chart of a method for resource configuration provided by an embodiment of the present disclosure. The method is performed by a network device. As shown in FIG. 9, the method for resource configuration may include the following steps.

At step 901, first capability information reported through a first signaling by a UE is acquired, and second capability information reported through a second signaling by the UE is acquired.

In an embodiment of the present disclosure, the second signaling may be, for example, a maxNumberSSB-CSI-RS-Total signaling.

At step 902, a first measurement resource configuration for measuring the non-connected cell and a second measurement resource configuration for measuring a connected cell are configured to the UE.

Relevant introduction to steps 901-902 may refer to description of the above embodiments.

To sum up, in the method for resource configuration provided by embodiments of the present disclosure, the UE may report the measurement capability information to the network device. The measurement capability information includes at least one of: the first capability information that may be configured to indicate the measurement capability of the UE when the UE measures the non-connected cell of the UE, or the second capability information that may be configured to indicate the measurement capability of the UE when the UE measures the connected cell and the non-connected cell of the UE simultaneously. After that, the UE may acquire the first measurement resource configuration for measuring the non-connected cell and the second measurement resource configuration for measuring the connected cell configured by the network device. In this way, in embodiments of the present disclosure, the UE may report the measurement capability of the UE for measuring the connected cell and/or the measurement capability of the UE for simultaneously measuring the connected cell and the non-connected cell to the network device. After that, the network device can configure the measurement resource configuration to the UE based on the measurement capability of the UE for measuring the connected cell and/or the measurement capability of the UE for simultaneously measuring the connected cell and the non-connected cell, so that the measurement resource configuration configured by the network device can match the measurement capability of the UE, avoiding the situation of "the measurement resource configuration configured to the UE by the network device is greater than the measurement capability of the UE, causing the UE to be unable to perform the measurement, resulting in a waste of resources, or the measurement resource configured to the UE by the network device is smaller than the measurement capability of the UE, resulting in the UE being unable to acquire an accurate measurement result", achieving accurate configuration of measurement resources.

FIG. 10 is a flow chart of a method for resource configuration provided by an embodiment of the present disclosure. The method is performed by a network device. As shown in FIG. 10, the method for resource configuration may include the following steps.

At step 1001, third capability information reported by a UE is acquired.

In an embodiment of the present disclosure, a method for acquiring the third capability information reported by the UE may include:
acquiring the third capability information reported by the UE through a third signaling. In an embodiment of the present disclosure, the third signaling may be, for example, a beamManagementSSB-CSI-RS signaling.

At step 1002, measurement capability information reported by the UE is acquired.

It should be noted that, in an embodiment of the present disclosure, there is no order limit between the above steps 1001 and 1002. That is, step 1001 and step 1002 may be performed at the same time, or step 1001 may be performed first and then step 1002 is performed, or step 1002 may be performed first and then step 1001 is performed.

At step 1003, a first measurement resource configuration for measuring the non-connected cell and a second measurement resource configuration for measuring a connected cell are configured to the UE.

Relevant introduction to steps 1001-1003 may refer to description of the above embodiments.

To sum up, in the method for resource configuration provided by embodiments of the present disclosure, the UE may report the measurement capability information to the network device. The measurement capability information includes at least one of: the first capability information that may be configured to indicate the measurement capability of the UE when the UE measures the non-connected cell of the UE, or the second capability information that may be configured to indicate the measurement capability of the UE when the UE measures the connected cell and the non-connected cell of the UE simultaneously. After that, the UE may acquire the first measurement resource configuration for measuring the non-connected cell and the second measurement resource configuration for measuring the connected cell configured by the network device. In this way, in embodiments of the present disclosure, the UE may report the measurement capability of the UE for measuring the connected cell and/or the measurement capability of the UE for simultaneously measuring the connected cell and the non-connected cell to the network device. After that, the network device can configure the measurement resource configuration to the UE based on the measurement capability of the UE for measuring the connected cell and/or the measurement capability of the UE for simultaneously measuring the connected cell and the non-connected cell, so that the measurement resource configuration configured by the network device can match the measurement capability of the UE, avoiding the situation of "the measurement resource configuration configured to the UE by the network device is greater than the measurement capability of the UE, causing the UE to be unable to perform the measurement, resulting in a waste of resources, or the measurement resource configured to the UE by the network device is smaller than the measurement capability of the UE, resulting in the UE being unable to acquire an accurate measurement result", achieving accurate configuration of measurement resources.

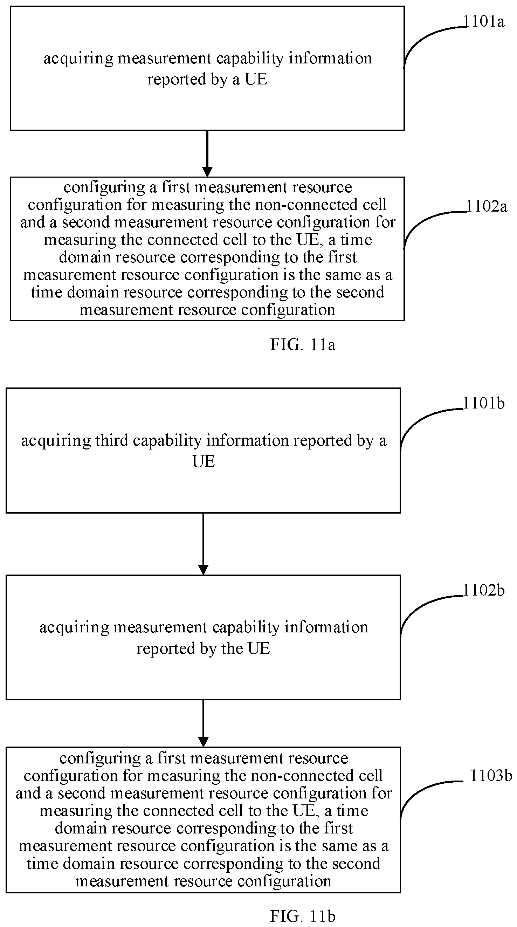

FIG. 11a is a flow chart of a method for resource configuration provided by an embodiment of the present disclosure. The method is performed by a network device. As shown in FIG. 11a, the method for resource configuration may include the following steps.

At step 1101a, measurement capability information reported by a UE is acquired.

At step 1102a, a first measurement resource configuration for measuring the non-connected cell and a second measurement resource configuration for measuring a connected cell are configured to the UE, and a time domain resource corresponding to the first measurement resource configuration is the same as a time domain resource corresponding to the second measurement resource configuration.

In an embodiment of the present disclosure, when the time domain resource corresponding to the first measurement resource configuration and the time domain resource corresponding to the second measurement resource configuration are the same, the first measurement resource configuration and the second measurement resource configuration meet the following conditions:
a number of resources occupied by reference signals to be measured in the first measurement resource configuration is less than or equal to the maximum number in the first capability information; and
a number of resources occupied by reference signals to be measured in the first measurement resource configuration and the second measurement resource configuration is less than or equal to the maximum number in the second capability information.

Relevant introduction to steps 1101a-1103a may refer to description of the above embodiments.

To sum up, in the method for resource configuration provided by embodiments of the present disclosure, the UE may report the measurement capability information to the network device. The measurement capability information includes at least one of: the first capability information that may be configured to indicate the measurement capability of the UE when the UE measures the non-connected cell of the UE, or the second capability information that may be configured to indicate the measurement capability of the UE when the UE measures the connected cell and the non-connected cell of the UE simultaneously. After that, the UE may acquire the first measurement resource configuration for measuring the non-connected cell and the second measurement resource configuration for measuring the connected cell configured by the network device. In this way, in embodiments of the present disclosure, the UE may report the measurement capability of the UE for measuring the connected cell and/or the measurement capability of the UE for simultaneously measuring the connected cell and the non-connected cell to the network device. After that, the network device can configure the measurement resource configuration to the UE based on the measurement capability of the UE for measuring the connected cell and/or the measurement capability of the UE for simultaneously measuring the connected cell and the non-connected cell, so that the measurement resource configuration configured by the network device can match the measurement capability of the UE, avoiding the situation of "the measurement resource configuration configured to the UE by the network device is greater than the measurement capability of the UE, causing the UE to be unable to perform the measurement, resulting in a waste of resources, or the measurement resource configured to the UE by the network device is smaller than the measurement capability of the UE, resulting in the UE being unable to acquire an accurate measurement result", achieving accurate configuration of measurement resources.

FIG. 11b is a flow chart of a method for resource configuration provided by an embodiment of the present disclosure. The method is performed by a network device. As shown in FIG. 11b, the method for resource configuration may include the following steps.

At step 1101b, third capability information reported by a UE is acquired.

In an embodiment of the present disclosure, the third capability information is configured to indicate a measurement capability of the UE when the UE measures a connected cell.

In an embodiment of the present disclosure, the third capability information includes a maximum number of reference signals that the UE is able to support when the UE simultaneously measures multiple reference signals for the connected cell.

At step 1102b, measurement capability information reported by the UE is acquired.

At step 1103b, a first measurement resource configuration for measuring the non-connected cell and a second measurement resource configuration for measuring a connected cell are configured to the UE, and a time domain resource corresponding to the first measurement resource configuration is the same as a time domain resource corresponding to the second measurement resource configuration.

In an embodiment of the present disclosure, when the time domain resource corresponding to the first measurement resource configuration and the time domain resource corresponding to the second measurement resource configuration are the same, the first measurement resource configuration and the second measurement resource configuration meet the following conditions:
a number of resources occupied by reference signals to be measured in the first measurement resource configuration is less than or equal to the maximum number in the first capability information;
a number of resources occupied by reference signals to be measured in the second measurement resource configuration is less than or equal to the maximum number in the third capability information; and
a number of resources occupied by reference signals to be measured in the first measurement resource configuration and the second measurement resource configuration is less than or equal to the maximum number in the second capability information.

Relevant introduction to steps 1101b-1103b may refer to description of the above embodiments.

To sum up, in the method for resource configuration provided by embodiments of the present disclosure, the UE may report the measurement capability information to the network device. The measurement capability information includes at least one of: the first capability information that may be configured to indicate the measurement capability of the UE when the UE measures the non-connected cell of the UE, or the second capability information that may be configured to indicate the measurement capability of the UE when the UE measures the connected cell and the non-connected cell of the UE simultaneously. After that, the UE may acquire the first measurement resource configuration for measuring the non-connected cell and the second measurement resource configuration for measuring the connected cell configured by the network device. In this way, in embodiments of the present disclosure, the UE may report the measurement capability of the UE for measuring the connected cell and/or the measurement capability of the UE for simultaneously measuring the connected cell and the non-connected cell to the network device. After that, the network device can configure the measurement resource configuration to the UE based on the measurement capability of the UE for measuring the connected cell and/or the measurement capability of the UE for simultaneously measuring the connected cell and the non-connected cell, so that the measurement resource configuration configured by the network device can match the measurement capability of the UE, avoiding the situation of "the measurement resource configuration configured to the UE by the network device is greater than the measurement capability of the UE, causing the UE to be unable to perform the measurement, resulting in a waste of resources, or the measurement resource configured to the UE by the network device is smaller than the measurement capability of the UE, resulting in the UE being unable to acquire an accurate measurement result", achieving accurate configuration of measurement resources.

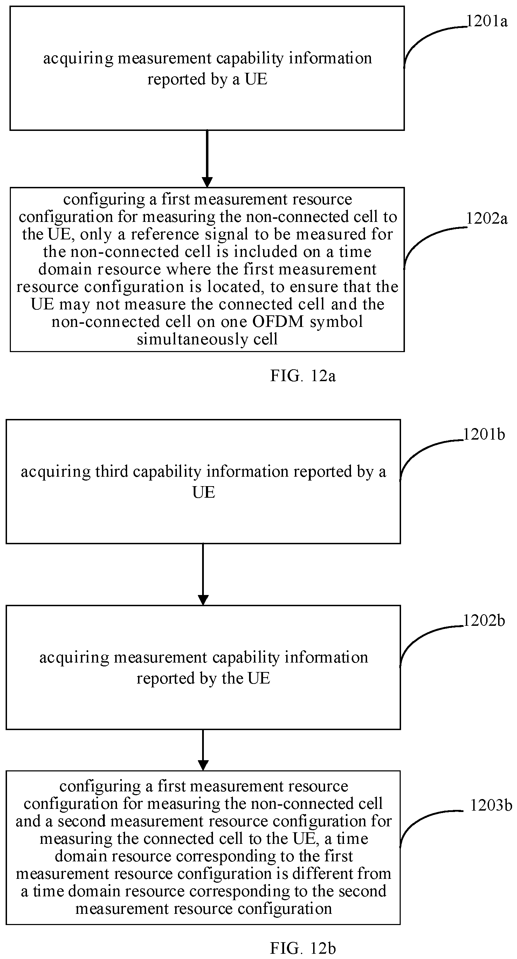

FIG. 12a is a flow chart of a method for resource configuration provided by an embodiment of the present disclosure. The method is performed by a network device. As shown in FIG. 12, the method for resource configuration may include the following steps.

At step 1201a, measurement capability information reported by a UE is acquired.

At step 12021, a first measurement resource configuration for measuring the non-connected cell is configured to the UE, and only a reference signal to be measured for the non-connected cell is included on a time domain resource where the first measurement resource configuration is located, to ensure that the UE may not measure the connected cell and the non-connected cell on one OFDM symbol simultaneously.

In an embodiment of the present disclosure, when a time domain resource corresponding to the first measurement resource configuration is different from a time domain resource corresponding to a second measurement resource configuration, the first measurement resource configuration and the second measurement resource configuration meet a following condition:
a number of resources occupied by reference signals to be measured in the first measurement resource configuration is less than or equal to the maximum number in the first capability information.

Relevant introduction to steps 1201a-1202a may refer to description of the above embodiments.

To sum up, in the method for resource configuration provided by embodiments of the present disclosure, the UE may report the measurement capability information to the network device. The measurement capability information includes at least one of: the first capability information that may be configured to indicate the measurement capability of the UE when the UE measures the non-connected cell of the UE, or the second capability information that may be configured to indicate the measurement capability of the UE when the UE measures the connected cell and the non-connected cell of the UE simultaneously. After that, the UE may acquire the first measurement resource configuration for measuring the non-connected cell and the second measurement resource configuration for measuring the connected cell configured by the network device. In this way, in embodiments of the present disclosure, the UE may report the measurement capability of the UE for measuring the connected cell and/or the measurement capability of the UE for simultaneously measuring the connected cell and the non-connected cell to the network device. After that, the network device can configure the measurement resource configuration to the UE based on the measurement capability of the UE for measuring the connected cell and/or the measurement capability of the UE for simultaneously measuring the connected cell and the non-connected cell, so that the measurement resource configuration configured by the network device can match the measurement capability of the UE, avoiding the situation of "the measurement resource configuration configured to the UE by the network device is greater than the measurement capability of the UE, causing the UE to be unable to perform the measurement, resulting in a waste of resources, or the measurement resource configured to the UE by the network device is smaller than the measurement capability of the UE, resulting in the UE being unable to acquire an accurate measurement result", achieving accurate configuration of measurement resources.

FIG. 12b is a flow chart of a method for resource configuration provided by an embodiment of the present disclosure. The method is performed by a network device. As shown in FIG. 12, the method for resource configuration may include the following steps.

At step 1201b, third capability information reported by a UE is acquired.

In an embodiment of the present disclosure, the third capability information is configured to indicate a measurement capability of the UE when the UE measures a connected cell.

In an embodiment of the present disclosure, the third capability information includes a maximum number of reference signals that the UE is able to support when the UE simultaneously measures multiple reference signals for the connected cell.

At step 1202b, measurement capability information reported by the UE is acquired.

At step 1203b, a first measurement resource configuration for measuring the non-connected cell and a second measurement resource configuration for measuring a connected cell are configured to the UE, and a time domain resource corresponding to the first measurement resource configuration is different from a time domain resource corresponding to the second measurement resource configuration.

In an embodiment of the present disclosure, when the time domain resource corresponding to the first measurement resource configuration is different from the time domain resource corresponding to the second measurement resource configuration, the first measurement resource configuration and the second measurement resource configuration meet the following conditions:
a number of resources occupied by reference signals to be measured in the first measurement resource configuration is less than or equal to the maximum number in the first capability information; and
a number of resources occupied by reference signals to be measured in the second measurement resource configuration is less than or equal to the maximum number in the third capability information.

Relevant introduction to steps 1201b-1203b may refer to description of the above embodiments.

To sum up, in the method for resource configuration provided by embodiments of the present disclosure, the UE may report the measurement capability information to the network device. The measurement capability information includes at least one of: the first capability information that may be configured to indicate the measurement capability of the UE when the UE measures the non-connected cell of the UE, or the second capability information that may be configured to indicate the measurement capability of the UE when the UE measures the connected cell and the non-connected cell of the UE simultaneously. After that, the UE may acquire the first measurement resource configuration for measuring the non-connected cell and the second measurement resource configuration for measuring the connected cell configured by the network device. In this way, in embodiments of the present disclosure, the UE may report the measurement capability of the UE for measuring the connected cell and/or the measurement capability of the UE for simultaneously measuring the connected cell and the non-connected cell to the network device. After that, the network device can configure the measurement resource configuration to the UE based on the measurement capability of the UE for measuring the connected cell and/or the measurement capability of the UE for simultaneously measuring the connected cell and the non-connected cell, so that the measurement resource configuration configured by the network device can match the measurement capability of the UE, avoiding the situation of "the measurement resource configuration configured to the UE by the network device is greater than the measurement capability of the UE, causing the UE to be unable to perform the measurement, resulting in a waste of resources, or the measurement resource configured to the UE by the network device is smaller than the measurement capability of the UE, resulting in the UE being unable to acquire an accurate measurement result", achieving accurate configuration of measurement resources.

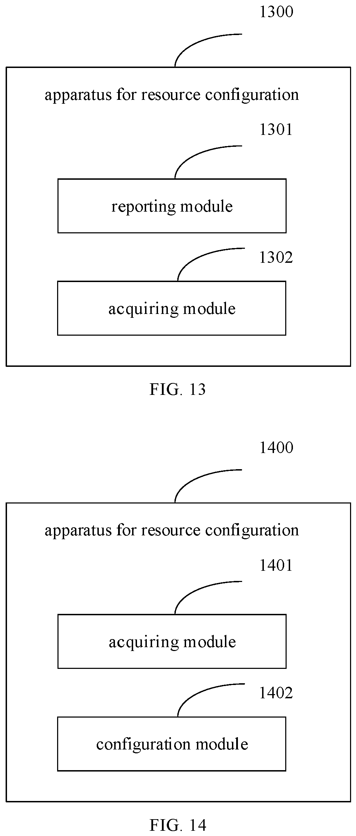

FIG. 13 is a block diagram of an apparatus for resource configuration provided by an embodiment of the present disclosure. As shown in FIG. 13, the apparatus may include:
a reporting module, configured to report measurement capability information to a network device, in which the measurement capability information includes at least one of:
first capability information, configured to indicate a measurement capability of user equipment (UE) when the UE measures a non-connected cell of the UE; or
second capability information, configured to indicate a measurement capability of the UE when the UE measures a connected cell and the non-connected cell of the UE simultaneously; and
an acquiring module, configured to acquire a first measurement resource configuration for measuring the non-connected cell and a second measurement resource configuration for measuring the connected cell configured by the network device.

To sum up, in the apparatus for resource configuration provided by embodiments of the present disclosure, the UE may report the measurement capability information to the network device. The measurement capability information includes at least one of: the first capability information that may be configured to indicate the measurement capability of the UE when the UE measures the non-connected cell of the UE, or the second capability information that may be configured to indicate the measurement capability of the UE when the UE measures the connected cell and the non-connected cell of the UE simultaneously. After that, the UE may acquire the first measurement resource configuration for measuring the non-connected cell and the second measurement resource configuration for measuring the connected cell configured by the network device. In this way, in embodiments of the present disclosure, the UE may report the measurement capability of the UE for measuring the connected cell and/or the measurement capability of the UE for simultaneously measuring the connected cell and the non-connected cell to the network device. After that, the network device can configure the measurement resource configuration to the UE based on the measurement capability of the UE for measuring the connected cell and/or the measurement capability of the UE for simultaneously measuring the connected cell and the non-connected cell, so that the measurement resource configuration configured by the network device can match the measurement capability of the UE, avoiding the situation of "the measurement resource configuration configured to the UE by the network device is greater than the measurement capability of the UE, causing the UE to be unable to perform the measurement, resulting in a waste of resources, or the measurement resource configured to the UE by the network device is smaller than the measurement capability of the UE, resulting in the UE being unable to acquire an accurate measurement result", achieving accurate configuration of measurement resources.

Optionally, in an embodiment of the disclosure, the first capability information includes a maximum number of reference signals supported by the UE when the UE simultaneously measures a plurality of reference signals for the non-connected cell.

Optionally, in an embodiment of the disclosure, the second capability information includes a maximum number of reference signals supported by the UE when the UE simultaneously measures reference signals for the connected cell and the non-connected cell.

Optionally, in an embodiment of the disclosure, optionally, in an embodiment of the disclosure, in response to the network device configuring the UE to simultaneously measure the connected cell and the non-connected cell, a time domain resource corresponding to the first measurement resource configuration is the same as a time domain resource corresponding to the second measurement resource configuration; and
the first measurement resource configuration and the second measurement resource configuration meet following conditions:
a number of resources occupied by reference signals to be measured in the first measurement resource configuration is less than or equal to the maximum number in the first capability information; and
a number of resources occupied by reference signals to be measured in the first measurement resource configuration and the second measurement resource configuration is less than or equal to the maximum number in the second capability information.

Optionally, in an embodiment of the disclosure, in response to the network device configuring the UE not to measure the connected cell and the non-connected cell simultaneously, a time domain resource corresponding to the first measurement resource configuration is different from a time domain resource corresponding to the second measurement resource; and
the first measurement resource configuration and the second measurement resource configuration meet a following condition:
a number of resources occupied by reference signals to be measured in the first measurement resource configuration is less than or equal to the maximum number in the first capability information.

FIG. 14 is a block diagram of an apparatus for resource configuration provided by an embodiment of the present disclosure. As shown in FIG. 14, the apparatus may include:
an acquiring module, configured to acquire measurement capability information reported by user equipment (UE), in which the measurement capability information includes at least one of:
first capability information, configured to indicate a measurement capability of the UE when the UE measures a non-connected cell of the UE; or
second capability information, configured to indicate a measurement capability of the UE when the UE measures a connected cell and the non-connected cell of the UE simultaneously; and
a configuration module, configured to configure a first measurement resource configuration for measuring the non-connected cells and a second measurement resource configuration for measuring the connected cell to the UE.

To sum up, in the apparatus for resource configuration provided by embodiments of the present disclosure, the UE may report the measurement capability information to the network device. The measurement capability information includes at least one of: the first capability information that may be configured to indicate the measurement capability of the UE when the UE measures the non-connected cell of the UE, or the second capability information that may be configured to indicate the measurement capability of the UE when the UE measures the connected cell and the non-connected cell of the UE simultaneously. After that, the UE may acquire the first measurement resource configuration for measuring the non-connected cell and the second measurement resource configuration for measuring the connected cell configured by the network device. In this way, in embodiments of the present disclosure, the UE may report the measurement capability of the UE for measuring the connected cell and/or the measurement capability of the UE for simultaneously measuring the connected cell and the non-connected cell to the network device. After that, the network device can configure the measurement resource configuration to the UE based on the measurement capability of the UE for measuring the connected cell and/or the measurement capability of the UE for simultaneously measuring the connected cell and the non-connected cell, so that the measurement resource configuration configured by the network device can match the measurement capability of the UE, avoiding the situation of "the measurement resource configuration configured to the UE by the network device is greater than the measurement capability of the UE, causing the UE to be unable to perform the measurement, resulting in a waste of resources, or the measurement resource configured to the UE by the network device is smaller than the measurement capability of the UE, resulting in the UE being unable to acquire an accurate measurement result", achieving accurate configuration of measurement resources.

Optionally, in an embodiment of the disclosure, the first capability information includes a maximum number of reference signals supported by the UE when the UE simultaneously measures a plurality of reference signals for the non-connected cell.

Optionally, in an embodiment of the disclosure, the second capability information includes a maximum number of reference signals supported by the UE when the UE simultaneously measures reference signals for the connected cell and the non-connected cell.

Optionally, in an embodiment of the disclosure, in response to the network device configuring the UE to simultaneously measure the connected cell and the non-connected cell, a time domain resource corresponding to the first measurement resource configuration is the same as a time domain resource corresponding to the second measurement resource configuration; and
the first measurement resource configuration and the second measurement resource configuration meet following conditions:
a number of resources occupied by reference signals to be measured in the first measurement resource configuration is less than or equal to the maximum number in the first capability information; and
a number of resources occupied by reference signals to be measured in the first measurement resource configuration and the second measurement resource configuration is less than or equal to the maximum number in the second capability information.

Optionally, in an embodiment of the disclosure, in response to the network device configuring the UE not to measure the connected cell and the non-connected cell simultaneously, a time domain resource corresponding to the first measurement resource configuration is different from a time domain resource corresponding to the second measurement resource configuration; and
the first measurement resource configuration and the second measurement resource configuration meet a following condition:
a number of resources occupied by reference signals to be measured in the first measurement resource configuration is less than or equal to the maximum number in the first capability information.

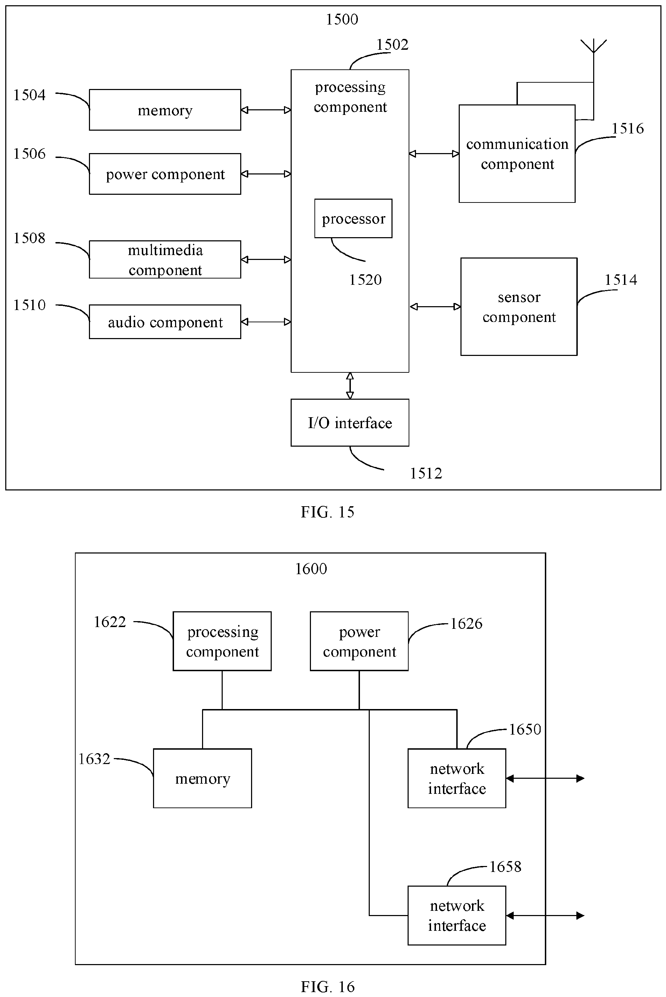

FIG. 15 is a block diagram illustrating a UE 1500 according to an embodiment of the disclosure. For example, the UE 1500 may be a mobile phone, a computer, a digital broadcasting terminal device, a message transceiver device, a game console, a tablet device, a medical device, a fitness device and a personal digital assistant.

As illustrated in FIG. 15, the UE 1500 may include one or more of the following components: a processing component 1502, a memory 1504, a power component 1506, a multimedia component 1508, an audio component 1510, an input/output (I/O) interface 1512, a sensor component 1514, and a communication component 1516.

The processing component 1502 typically controls overall operations of the UE 1500, such as the operations associated with display, telephone calls, data communications, camera operations, and recording operations. The processing component 1502 may include one or more processors 1520 to perform all or part of the steps in the above described method. Moreover, the processing component 1502 may include one or more modules which facilitate the interaction between the processing component 1502 and other components. For example, the processing component 1502 may include a multimedia module to facilitate the interaction between the multimedia component 1508 and the processing component 1502.

The memory 1504 is configured to store various types of data to support the operation of the UE 1500. Examples of such data include instructions for any applications or methods operated on the UE 1500, contact data, phonebook data, messages, pictures, videos, etc. The memory 1504 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or an optical disk.

The power component 1506 provides power to various components of the UE 1500. The power component 1506 may include a power management system, one or more power sources, and any other components associated with the generation, management, and distribution of power in the UE 1500.

The multimedia component 1508 includes a screen providing an output interface between the UE 1500 and a user. In some embodiments, the screen may include a Liquid Crystal Display (LCD) and a Touch Panel (TP). In case that the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of time and a pressure associated with the touch or swipe action. In some embodiments, the multimedia component 1508 includes a front-facing camera and/or a rear-facing camera. When the UE 1500 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1510 is configured to output and/or input audio signals. For example, the audio component 1510 includes a microphone (MIC) configured to receive an external audio signal when the UE 1500 is in an operation mode, such as a call mode, a recording mode, and a voice recognition mode. The received audio signal may be further stored in the memory 1504 or transmitted via the communication component 1516. In some embodiments, the audio component 1510 further includes a speaker to output audio signals.

The I/O interface 1512 provides an interface between the processing component 1502 and peripheral interface modules, such as a keyboard, a click wheel, buttons, and the like. The buttons may include, but are not limited to, a home button, a volume button, a starting button, and a locking button.

The sensor component 1513 includes one or more sensors to provide status assessments of various aspects of the UE 1500. For instance, the sensor component 1513 may detect an open/closed status of the UE 1500, relative positioning of components, e.g., the display and the keypad, of the UE 1500, a change in position of the UE 1500 or a component of the UE 1500, a presence or absence of user contact with the UE 1500, an orientation or an acceleration/deceleration of the UE 1500, and a change in temperature of the UE 1500. The sensor component 1513 may include a proximity sensor configured to detect the presence of nearby objects without any physical contact. The sensor component 1513 may also include a light sensor, such as a Complementary Metal Oxide Semiconductor (CMOS) or Charge-Coupled Device (CCD) image sensor, for use in imaging applications. In some embodiments, the sensor component 1513 may also include an accelerometer sensor, a gyroscope sensor, a magnetic sensor, a pressure sensor, or a temperature sensor.

The communication component 1516 is configured to facilitate communication, wired or wirelessly, between the UE 1500 and other devices. The UE 1500 can access a wireless network based on a communication standard, such as Wi-Fi, 2G or 3G, or a combination thereof. In an embodiment, the communication component 1516 receives a broadcast signal from an external broadcast management system or broadcasts associated information via a broadcast channel. In an embodiment, the communication component 1516 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In embodiments, the UE 1500 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

FIG. 16 is a block diagram illustrating a network device 1600 of an embodiment of the disclosure. For example, the network device 1600 may be provided as a network device. As illustrated in FIG. 16, the network device 1600 includes a processing component 1611 consisting of one or more processors, and memory resources represented by a memory 1632 for storing instructions that may be executed by the processing component 1622, such as applications. The application programs stored in the memory 1632 may include one or more modules each corresponding to a set of instructions. In addition, the processing component 1610 is configured to execute the instructions to perform any of the methods described above that are applicable to the network device, for example, the methods shown in FIG. 1.

The network device 1600 may also include a power component 1626 configured to perform power management of the network device 1600, a wired or wireless network interface 1650 configured to connect the network device 1600 to a network, and an I/O interface 1658. The network device 1600 may operate based on an operating system stored in the memory 1632, such as Windows Server^{™}, Mac OS X^{™}, Unix^{™}, Linux^{™}, FreeBSD^{™}, or the like.

In the above embodiments of the disclosure, the method provided in embodiments of the disclosure is introduced from the perspective of the network device and the UE. In order to achieve the various functions of the method provided in the above embodiments of the disclosure, the network device and the UE may include a hardware structure, a software module, or hardware structure plus software module to achieve the above functions. One of the above functions can be executed in the form of hardware structure, software module, or hardware structure plus software module.

In the above embodiments of the disclosure, the method provided in embodiments of the disclosure is introduced from the perspective of the network device and the UE. In order to achieve the various functions of the method provided in the above embodiments of the disclosure, the network device and the UE may include a hardware structure, a software module, or hardware structure plus software module to achieve the above functions. One of the above functions can be executed in the form of hardware structure, software module, or hardware structure plus software module.

Embodiments of the disclosure provide a communication device. The communication device may include a transceiver module and a processing module. The transceiver module can include a sending module and/or a receiving module. The sending module is used to implement a sending function, the receiving module is used to implement a receiving function, and the transceiver module can implement the sending and/or receiving function.

The communication device can be a terminal (such as the terminal in the above method embodiments), a device within a terminal, or a device that can be used together with the terminal. Alternatively, the communication device can be a network device, a device within a network device, or a device that can be used together with the network device.

Embodiments of the disclosure provide another communication device. The communication device can be a network device, a terminal (such as the terminal in the above method embodiments), a chip, a chip system, or a processor that supports the network device to implement the above method, and can also be a chip, a chip system, or a processor that supports the terminal to implement the above method. The device can be used to implement the methods in the above method embodiments, as described in the above method embodiments.

The communication device may include one or more processors. The processor may be a general-purpose processor or a dedicated processor, such as, a baseband processor and a central processor. The baseband processor is used for processing communication protocols and communication data. The central processor is used for controlling the communication device (e.g., a network device, a baseband chip, a terminal, a terminal chip, a distributed unit (DU), or a central unit (CU)), executing computer programs, and processing data of the computer programs.

Optionally, the communication device may include one or more memories on which a computer program may be stored. The processor executes the computer program to cause the communication device to perform the methods described in the above method embodiments. Optionally, the memory may also store data. The communication device and the memory may be provided separately or may be integrated together.

Optionally, the communication device may also include a transceiver and an antenna. The transceiver may be referred to as a transceiver unit, a transceiver machine, or a transceiver circuit, for realizing a transceiver function. The transceiver may include a receiver and a transmitter. The receiver may be referred to as a receiving machine or a receiving circuit, etc., for realizing the receiving function. The transmitter may be referred to as a transmitter machine or a transmitting circuit, etc., for realizing the transmitting function.

Optionally, the communication device may include one or more interface circuits. The interface circuits are used to receive code instructions and transmit them to the processor. The processor runs the code instructions to cause the communication device to perform the method described in the method embodiments.

In an implementation, the processor may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor may store a computer program. When the computer program runs on the processor, the communication device may be caused to perform the methods described in the method embodiments above. The computer program may be solidified in the processor, and in such case the processor may be implemented by hardware.

In an implementation, the communication device may include circuits. The circuits may implement the sending, receiving or communicating function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a terminal (such the UE in the above method embodiments), but the scope of the communication device described in the disclosure is not limited thereto, and the structure of the communication device may not be limited. The communication device may be a stand-alone device or may be part of a larger device. For example, the communication device may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

For a case where the communication device may be a chip or a chip system, the chip includes a processor and an interface. There may be one or more processors, and there may be multiple interfaces.

Optionally, the chip further includes a memory used to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs)) or a wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understands that the first, second, and other various numerical numbers involved in the disclosure are only described for the convenience of differentiation, and are not used to limit the scope of the embodiments of the disclosure, but to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D", are used to distinguish different technical features of the type, the technical features described using the "first", "second", and "third", and "A", "B", "C" and "D", do not indicate any order of precedence or magnitude.

Other implementations of the disclosure may be apparent to those skilled in the art from consideration of the specification and practice of the disclosure disclosed here. The disclosure is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It should be understood that the disclosure is not limited to the exaction construction that has been described above and illustrated in the accompanying drawings, and that various modifications and changes may be made without departing from the scope thereof. The scope of the disclosure only is limited by the appended claims.

## Claims

1. A method for resource configuration, performed by user equipment (UE), comprising:
reporting measurement capability information to a network device, wherein the measurement capability information comprises at least one of:
first capability information, configured to indicate a measurement capability of the UE when the UE measures a non-connected cell of the UE; or
second capability information, configured to indicate a measurement capability of the UE when the UE measures a connected cell and the non-connected cell of the UE simultaneously; and
acquiring a first measurement resource configuration for measuring the non-connected cell and a second measurement resource configuration for measuring the connected cell configured by the network device.

2. The method of claim 1, wherein the first capability information comprises a maximum number of reference signals supported by the UE when the UE simultaneously measures a plurality of reference signals for the non-connected cell.

3. The method of claim 1, wherein the second capability information comprises a maximum number of reference signals supported by the UE when the UE simultaneously measures reference signals for the connected cell and the non-connected cell.

4. The method of claim 1, wherein reporting the measurement capability information to the network device comprises:
reporting the measurement capability information to the network device through a radio resource control (RRC) signaling.

5. The method of claim 1, wherein in response to the network device configuring the UE to simultaneously measure the connected cell and the non-connected cell, a time domain resource corresponding to the first measurement resource configuration is the same as a time domain resource corresponding to the second measurement resource configuration; and
wherein the first measurement resource configuration and the second measurement resource configuration meet following conditions:
a number of resources occupied by reference signals to be measured in the first measurement resource configuration is less than or equal to a maximum number in the first capability information; or
a number of resources occupied by reference signals to be measured in the first measurement resource configuration and the second measurement resource configuration is less than or equal to a maximum number in the second capability information.

6. The method of claim 1, wherein in response to the network device configuring the UE not to measure the connected cell and the non-connected cell simultaneously, a time domain resource corresponding to the first measurement resource configuration is different from a time domain resource corresponding to the second measurement resource; and
wherein the first measurement resource configuration and the second measurement resource configuration meet a following condition:
a number of resources occupied by reference signals to be measured in the first measurement resource configuration is less than or equal to the maximum number in the first capability information.

7. A method for resource configuration, performed by a network device, comprising:
acquiring measurement capability information reported by user equipment (UE), wherein the measurement capability information comprises at least one of:
first capability information, configured to indicate a measurement capability of the UE when the UE measures a non-connected cell of the UE; or
second capability information, configured to indicate a measurement capability of the UE when the UE measures a connected cell and the non-connected cell of the UE simultaneously; and
configuring a first measurement resource configuration for measuring the non-connected cell and a second measurement resource configuration for measuring the connected cell to the UE.

8. The method of claim 7, wherein the first capability information comprises a maximum number of reference signals supported by the UE when the UE simultaneously measures a plurality of reference signals for the non-connected cell.

9. The method of claim 7, wherein the second capability information comprises a maximum number of reference signals supported by the UE when the UE simultaneously measures reference signals for the connected cell and the non-connected cell.

10. The method of claim 7, wherein acquiring the measurement capability information reported by the UE comprises:
acquiring the measurement capability information reported by the UE through a radio resource control (RRC) signaling.

11. The method of claim 7, wherein in response to the network device configuring the UE to simultaneously measure the connected cell and the non-connected cell, a time domain resource corresponding to the first measurement resource configuration is the same as a time domain resource corresponding to the second measurement resource configuration; and
wherein the first measurement resource configuration and the second measurement resource configuration meet following conditions:
a number of resources occupied by reference signals to be measured in the first measurement resource configuration is less than or equal to a maximum number in the first capability information; or
a number of resources occupied by reference signals to be measured in the first measurement resource configuration and the second measurement resource configuration is less than or equal to a maximum number in the second capability information.

12. The method of claim 7, wherein in response to the network device configuring the UE not to measure the connected cell and the non-connected cell simultaneously, a time domain resource corresponding to the first measurement resource configuration is different from a time domain resource corresponding to the second measurement resource configuration; and
wherein the first measurement resource configuration and the second measurement resource configuration meet a following condition:
a number of resources occupied by reference signals to be measured in the first measurement resource configuration is less than or equal to the maximum number in the first capability information.

13. An apparatus for resource configuration, comprising:
a reporting module, configured to report measurement capability information to a network device, wherein the measurement capability information comprises at least one of:
first capability information, configured to indicate a measurement capability of user equipment (UE) when the UE measures a non-connected cell of the UE; or
second capability information, configured to indicate a measurement capability of the UE when the UE measures a connected cell and the non-connected cell of the UE simultaneously; and
an acquiring module, configured to acquire a first measurement resource configuration for measuring the non-connected cell and a second measurement resource configuration for measuring the connected cell configured by the network device.

14. An apparatus for resource configuration, comprising:
an acquiring module, configured to acquire measurement capability information reported by user equipment (UE), wherein the measurement capability information comprises at least one of:
first capability information, configured to indicate a measurement capability of the UE when the UE measures a non-connected cell of the UE; or
second capability information, configured to indicate a measurement capability of the UE when the UE measures a connected cell and the non-connected cell of the UE simultaneously; and
a configuration module, configured to configure a first measurement resource configuration for measuring the non-connected cells and a second measurement resource configuration for measuring the connected cell to the UE.

15. A communication device, comprising a processor and a memory, wherein a computer program is stored in the memory, and the processor is configured to execute the computer program stored in the memory, to cause the communication device to perform the method of any one of claims 1 to 6.

16. A communication device, comprising a processor and a memory, wherein a computer program is stored in the memory, and the processor is configured to execute the computer program stored in the memory, to cause the communication device to perform the method of any one of claims 7 to 12.

17. A communication device, comprising: a processor and an interface circuit, wherein
the interface circuit is configured to receive code instructions and transmit the code instructions to the processor; and
the processor is configured to run the code instructions to perform the method of any one of claims 1 to 6.

18. A communication device, comprising: a processor and an interface circuit, wherein
the interface circuit is configured to receive code instructions and transmit the code instructions to the processor; and
the processor is configured to run the code instructions to perform the method of any one of claims 7 to 12.

19. A computer-readable storage medium for storing instructions, wherein, when the instructions are executed, the method of any one of claims 1 to 6 is performed.

20. A computer-readable storage medium for storing instructions, wherein, when the instructions are executed, the method of any one of claims 7 to 12 is performed.
